# FASCICULE DE BREVET EUROPEEN

(11) **EP 1 098 267 B1**
(45) Date de publication et mention de la délivrance du brevet: **11.07.2007**
(21) Numéro de dépôt: 00403014.4
(22) Date de dépôt: 30.10.2000
(51) Int. Cl.: G06K 19/073

(54) **Procédé pour assurer l'inviolabilité d'un micromodule de carte à puce contre une analyse de sa consommation de courant et micromodule agencé pour sa mise en oeuvre**
Verfahren zur Gewährleistung der Unverletzlichkeit eines Chipkartenmikromoduls gegen eine Stromverbrauchsanalyse und entsprechendes Mikromodul
Method for preserving the inviolability of a chip card micromodule against a current consumption analysis and corresponding micromodule

(30) Priorité: 02.11.1999 FR 9913664
(43) Date de publication de la demande: 09.05.2001
(73) Titulaire: SAGEM Défense Sécurité, 75015 Paris (FR)
(72) Inventeur: Chabanne, Hervé, 78200 Mantes la Jolie (FR); Tissot, Nicolas, 95240 Cormeilles en Parisis (FR)
(74) Mandataire: Gorrée, Jean-Michel

(56) Documents cités:
- FR-A- 2 774 492
- FR-A- 2 776 410
- US-A- 4 881 199

## Description

La présente invention concerne des perfectionnements apportés à la protection des cartes à puce contre les fraudes et plus particulièrement elle vise des perfectionnements destinés à assurer l'inviolabilité d'un micromodule de carte à puce contre une analyse de sa consommation de courant.

On rappellera tout d'abord que le micromodule est l'ensemble constitué par un microcircuit (ou puce), un réseau de contacts ou vignette disposé autour du microcircuit et à distance de celui-ci, et des fils fins reliant le microcircuit aux contacts, une résine enrobant le microcircuit et les fils et supportant les contacts en surface.

L'intensité du courant électrique consommé par un micromodule de carte à puce en cours de fonctionnement varie en fonction des valeurs traitées par le microcircuit contenu dans le micromodule.

Or l'énergie électrique nécessitée pour le fonctionnement de la carte à puce est fournie par la machine avec laquelle la carte coopère, autrement dit l'alimentation électrique est extérieure à la carte.

Il est donc possible, en détectant de façon continue l'intensité instantanée du courant nécessité par la carte en fonctionnement, d'en déduire des informations sur les données traitées par la carte, et notamment, par exemple, d'en déduire un code secret.

Pour tenter d'éviter qu'une telle détection d'informations puisse être effectuée à partir du courant électrique consommé par le micromodule en fonctionnement, il est connu de modifier par un artifice le courant consommé par la carte, par exemple en lui ajoutant des valeurs aléatoires fournies par un générateur de signaux aléatoires (voir par exemple le document FR-A-2 776 410).

Le document FR-A-2 774 492 divulgue un dispositif à circuit intégré comportant une capacité apte à atténuer l'amplitude de pics du courant consommé par le circuit intégré dudit dispositif.

L'inconvénient majeur de ces technologies connues est de nécessiter des moyens électroniques importants qui se traduisent par l'obligation d'ajouter, dans le microcircuit, un dispositif spécifique dédié au brouillage de la consommation de courant du microcircuit. Or la production d'un microcircuit nouveau est une opération qui, même lorsqu'il s'agit d'une modification effectuée sur un circuit préexistant, est complexe et très onéreuse, aussi bien pour la mise au point du nouveau circuit lui-même que pour la réalisation des outils de production.

L'invention a pour but de proposer des moyens simples et donc peu encombrants pour empêcher la détection de la valeur exacte de la consommation instantanée du micromodule.

A ces fins, selon un premier de ses aspects, l'invention propose un procédé pour prémunir un micromodule de carte à puce contre une analyse du courant électrique consommé par le microcircuit contenu dans le micromodule au cours de son fonctionnement, lequel procédé se caractérise, selon l'invention, comme exposé dans la partie caractérisante de la revendication 1.

Le nombre des composants nécessités par un tel processus d'alimentation par condensateurs commutés reste relativement peu élevé et le type des composants utilisés (essentiellement, d'une part, des condensateurs et, d'autre part, des interrupteurs réalisés sous forme de transistors utilisés en commutation) sont les composants couramment mis en oeuvre dans les intégrations à haute densité.

Dans un premier mode de mise en oeuvre du procédé, la fonction d'alimentation tampon est assurée au sein du microcircuit. Certes, cette manière de procéder entraîne une modification du microcircuit initial. Toutefois il ne s'agit, là, que d'une modification minime, d'une part, parce que le nombre des composants électroniques à mettre en oeuvre pour assurer la fonction d'alimentation tampon est relativement faible et donc conduit à un volume d'implantation restreint et, d'autre part, parce qu'un microcircuit tel que ceux employés dans les cartes à puce conserve des circuits et/ou composants non exploités pour l'application prévue et qui peuvent donc être récupérés pour assurer la fonction envisagée d'alimentation tampon.

Dans un second mode de mise en oeuvre, qui est préféré, du procédé, la fonction d'alimentation tampon est assurée entre le microcircuit et la vignette formée par l'ensemble des contacts du micromodule. Ce mode de mise en oeuvre est préféré car il est moins contraignant que le précédent. Les composants nécessaires à la fonction d'alimentation tampon peuvent alors être mis en oeuvre sous forme d'un microcircuit additionnel, de très petite dimension eu égard au relativement faible nombre des composants utilisés, qui peut trouver place dans l'espace restreint entre la vignette et le microcircuit principal. Le mode de mise en oeuvre préféré n'entraîne aucune modification du microcircuit principal et la mise en place du microcircuit additionnel est assurée par l'assembleur qui produit le micromodule.

Le procédé conforme à l'invention faisant recours à la commutation séquentielle alternée de deux condensateurs procure un brouillage significatif du courant d'alimentation. Cependant la charge résiduelle du condensateur qui vient d'alimenter le micromodule et qui va être commutée sur le circuit de recharge demeure, encore, représentative du fonctionnement antérieur du microcircuit, et une information pourrait en être déduite concernant les données traitées par le microcircuit. Pour écarter, là aussi, cet inconvénient, un résultat d'une qualité encore accrue est obtenu en effectuant une décharge plus complète (au moins jusqu'à une valeur minimale préétablie) du condensateur qui vient d'assurer l'alimentation du microcircuit, avant qu'il soit commuté en position de recharge : ainsi, la charge résiduelle, si elle existe, ne peut plus traduire le fonctionnement du microcircuit. A cet effet, selon cette mise en oeuvre préférée du procédé de l'invention, on assure la fonction d'alimentation électrique tampon en alimentant le microcircuit à travers au moins trois condensateurs commutés cycliquement de manière que, simultanément :
- un premier condensateur, précédemment chargé, alimente le microcircuit,
- un deuxième condensateur, qui précédemment alimentait le microcircuit, est mis en court-circuit pour être plus déchargé,
- et un troisième condensateur, précédemment mis en court-circuit, est connecté à l'alimentation en vue d'être chargé,
ces étapes étant séquentiellement renouvelées avec permutation cyclique des condensateurs.

Selon un second de ses aspects, l'invention propose un micromodule de carte à puce agencé pour être prémuni contre une analyse du courant électrique qu'il consomme en fonctionnement, ce micromodule comprenant un microcircuit, une vignette constituée des contacts, et notamment un contact d'alimentation électrique, propres à la connexion avec un appareil de traitement, des fils reliant respectivement lesdits contacts au microcircuit, lequel micromodule, étant agencé selon l'invention, se caractérise par les dispositions exposées dans la partie caractérisante de la revendication 5.

Dans un mode de réalisation possible, lesdits moyens d'alimentation tampon sont intégrés dans le microcircuit, immédiatement en aval de la borne d'alimentation de celui-ci.

Dans un autre mode de réalisation, qui est préféré, lesdits moyens d'alimentation tampon sont réalisés sous forme d'un microcircuit annexe indépendant disposé dans un emplacement de la zone intermédiaire séparant la vignette et le microcircuit principal, ledit microcircuit annexe possédant une entrée raccordée au contact d'alimentation de la vignette et une sortie raccordée à la borne d'alimentation du microcircuit principal.

De façon pratique, les moyens d'alimentation tampon comprennent
- les susdits au moins deux condensateurs ayant une borne connectée à la masse,
- des moyens sélecteurs associés à chaque condensateur, qui sont connectés à l'autre borne de chaque condensateur et qui sont propres à raccorder celle-ci, sélectivement, au moins au contact d'alimentation ou au microcircuit,
- et des moyens de commande associés aux moyens sélecteurs pour commander ceux-ci de manière cyclique telle que, simultanément, un des condensateurs soit connecté au contact d'alimentation pour être chargé tandis qu'un autre condensateur est connecté au microcircuit pour alimenter celui-ci, puis inversement.

Dans un exemple de mise en oeuvre simple, mais déjà efficace, les moyens d'alimentation tampon comprennent deux condensateurs.

Dans un exemple de mise en oeuvre préféré qui conduit à un brouillage amélioré (meilleure maximisation de la consommation en courant d'alimentation), les moyens d'alimentation tampon comprennent trois condensateurs, et les moyens de commande associés aux moyens sélecteurs sont propres à commander ceux-ci de manière cyclique telle que, simultanément, un des condensateurs, précédemment déchargé, soit connecté au contact d'alimentation pour être chargé, tandis qu'un autre condensateur, précédemment en charge, est connecté au microcircuit pour alimenter celui-ci, et tandis enfin que le dernier condensateur, qui alimentait précédemment le microcircuit, est connecté à la masse pour être mis en court-circuit en vue d'être déchargé.

Pour obtenir des séquences de commutation évitant des doubles liaisons même très brèves, il est souhaitable que les moyens sélecteurs associés à chaque condensateur comprennent des couples d'interrupteurs connectés, d'un côté, au condensateur et, de l'autre côté, au contact d'alimentation pour l'un et au microcircuit pour l'autre et que les moyens de commande soient propres à commander les couples d'interrupteurs de manière séquentielle propre à éviter les connexions interférentes sur le microcircuit.

L'invention sera mieux comprise à la lecture de la description détaillée qui suit de certains modes de réalisation donnés à titre d'exemples non limitatifs. Dans cette description, on se réfère aux dessins annexés sur lesquels :
- la figure 1 illustre schématiquement un micromodule agencé selon un premier mode de réalisation conformément à l'invention ;
- la figure 2 illustre schématiquement un micromodule agencé selon un second mode de réalisation, préféré, conformément à l'invention ;
- les figures 3 et 4 sont des schémas électriques d'un premier exemple de réalisation, simple, montré dans deux configurations fonctionnelles, respectivement ;
- la figure 5 est un schéma électrique d'une variante préférée du premier exemple de réalisation des figures 3 et 4 ;
- la figure 6 est un schéma électrique d'un exemple de réalisation d'un composant de commande inclus dans les circuits des figures 3 à 5 ;
- la figure 7 illustre, par trois diagrammes, des séquences impulsionnelles respectivement à l'entrée et aux sorties du composant de commande de la figure 6 ;
- la figure 8 est un schéma électrique d'un second exemple de réalisation, préféré, conforme à l'invention ;
- la figure 9 est un schéma électrique d'une variante de réalisation de certaines branches du circuit de la figure 8 ;
- la figure 10 est un schéma électrique d'un exemple de réalisation d'un composant de commande inclus dans le circuit de la figure 8 ; et
- la figure 11 illustre, par six diagrammes, des séquences impulsionnelles en six positions du circuit de la figure 8, respectivement.

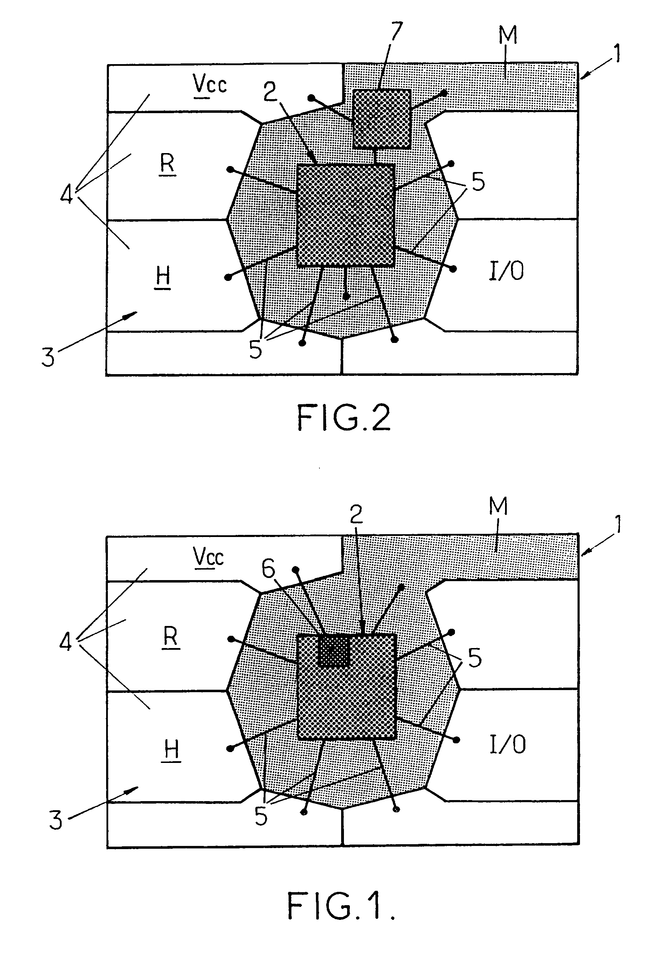

En se reportant tout d'abord aux figures 1 et 2, un micromodule 1 pour carte à puce ou analogue comprend essentiellement un microcircuit 2 (ou puce) - qui est un composant électronique à très haute intégration incluant en général au moins un microprocesseur - autour duquel est agencée une vignette 3 formée par un ensemble de contacts plats 4 ; des fils 5 relient le microcircuit 2 à chaque contact 4 ; i le microcircuit 2 et les fils 5 sont enrobés dans une résine, à la surface de laquelle apparaissent les contacts 4.

Les contacts 4 sont propres à coopérer avec des contacts mobiles d'un appareil dans lequel la carte est introduite, et chaque contact 4 est affecté à une liaison spécifique pour l'échange de signaux électriques avec l'appareil : en particulier sont présents les contacts d'alimentation V_{cc} (l'alimentation électrique nécessaire au fonctionnement du micromodule est assurée par l'appareil), d'horloge H, de réinitialisation R, d'échange des données I/O ; la masse M est constituée par le reste de la surface métallique non affectée aux contacts spécifiques 5 formant la vignette 3 (pour plus de clarté, le contact de masse a été représenté en gris clair sur les figures 1 et 2).

Pour assurer l'inviolabilité du micromodule face à une fraude par analyse du courant électrique consommé par le microcircuit en fonctionnement, l'invention propose de maximiser, au moins dans une certaine mesure, la consommation électrique du microcircuit afin d'empêcher que les variations instantanées du courant reflètent les opérations fonctionnelles du microcircuit, et en particulier reflètent les signes (par exemple ceux d'un code secret) traités par le microcircuit.

Une telle fonction de maximisation de la consommation est obtenue grâce à des moyens d'alimentation tampon inclus dans le micromodule, dans la ligne d'alimentation du microcircuit ; elle ne met en oeuvre qu'un nombre réduit de composants et ces moyens peuvent alors être aisément intégrés dans le micromodule 1.

Dans un premier mode de réalisation illustré à la figure 1, les moyens d'alimentation tampon sont intégrés au microcircuit 2 (schématisation par le rectangle 6) au niveau de la borne d'alimentation du microcircuit et ils sont reliés directement au contact 5 d'alimentation V_{cc}. Les moyens d'alimentation tampon 6 constituent ainsi l'entrée d'alimentation électrique du microcircuit. Bien qu'une telle implantation entraîne une modification des microcircuits préexistants, l'aménagement demeure toutefois restreint si l'on exploite des circuits et/ou composants présents dans les microcircuits, mais non utilisés dans le cadre de leur application traditionnelle. Bien que cela n'apparaisse pas sur la figure 1 pour ne pas alourdir le dessin, les moyens de lissage 6 sont raccordés non seulement à l'alimentation V_{cc}, mais également à d'autres sources de signaux (notamment les signaux d'horloge H) et bien sûr à la masse M.

A la figure 2 est illustré un second mode de réalisation, qui est préféré, dans lequel les moyens d'alimentation tampon sont réalisés sous forme d'un microcircuit annexe 7, de très petites dimensions en raison du nombre réduit des composants, et propre à être disposé dans l'intervalle extrêmement restreint entre la vignette 3 et le microcircuit 2. Le microcircuit annexe 7 est relié par des fils au contact d'alimentation V_{cc} (le microcircuit principal 2 n'étant plus relié directement à ce contact), et est relié à la masse et à l'horloge directement par des fils propres et/ou à travers le microcircuit principal 2. Un tel mode de réalisation est préféré car il n'affecte en rien le microcircuit principal, et la mise en place du microcircuit annexe est effectuée au cours de la fabrication du micromodule.

Une mise en oeuvre simple de l'invention fait appel à des condensateurs commutés. Le microcircuit 2 n'est plus alimenté directement à partir du contact 4 d'alimentation V_{cc}, mais à partir de condensateurs qui sont cycliquement et alternativement rechargés : ainsi le courant délivré par l'alimentation V_{cc} n'est plus le reflet exact du courant instantané consommé par le microcircuit.

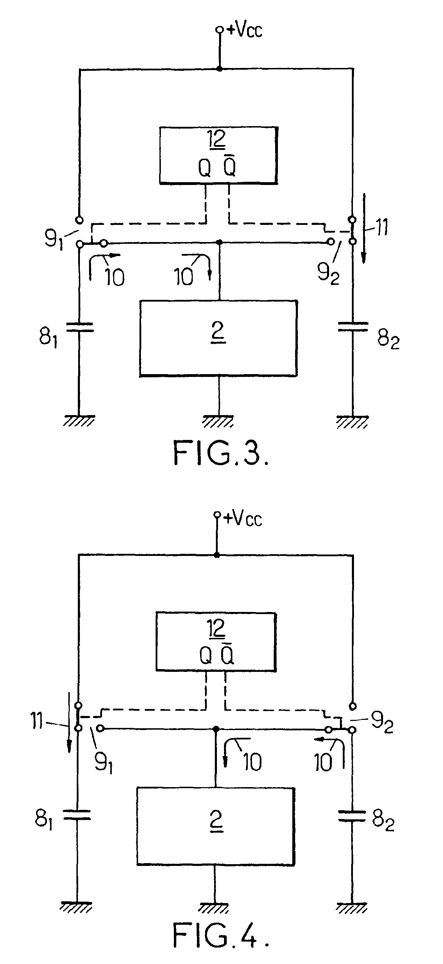

Aux figures 3 et 4 est représenté un schéma électrique illustrant un mode de réalisation simple des dispositions de l'invention. Deux condensateurs 8₁, 8₂ sont reliés, par une de leurs bornes, à la masse. Leur autre borne est reliée au contact mobile d'un sélecteur 9₁, 9₂ dont une borne est reliée à l'alimentation V_{cc} et l'autre borne est reliée au microcircuit 2 (borne d'entrée d'alimentation V_{cc} du microcircuit 2).

Dans la position fonctionnelle montrée à la figure 3, l'un des sélecteurs situé à gauche 9₁ relie le condensateur 8₁ correspondant au microcircuit : ayant été préalablement chargé, le condensateur 8₁ alimente le microcircuit 2 en se déchargeant dans celui-ci (flèches 10). Pendant ce temps, l'autre sélecteur 9₂ est dans une position reliant le condensateur correspondant 8₂ à l'alimentation V_{cc} : le condensateur 8₂ se charge (flèche 11) . Avant que le condensateur 8₁ soit trop déchargé (autrement dit avant que sa tension soit descendue en dessous d'un seuil prédéterminé), les deux sélecteurs 9₁ et 9₂ sont inversés. Ainsi, tandis que c'est maintenant le condensateur 8₁ qui est relié à l'alimentation V_{cc} et qui se charge, le condensateur 8₂ est raccordé au microcircuit 2 qu'il alimente.

Des moyens de commande 12 assurent la commande synchrone et cyclique des sélecteurs 8₁ et 8₂ pour leur faire occuper leurs deux positions alternativement et en opposition l'un par rapport à l'autre. La durée de chaque cycle doit être suffisamment brève pour que la décharge du condensateur alimentant le microcircuit n'amène pas la tension en-dessous d'une valeur de seuil. Par exemple, la commutation est déterminée pour que la décharge du condensateur n'excède pas 20 % de sa pleine charge pour la consommation maximale du microcircuit.

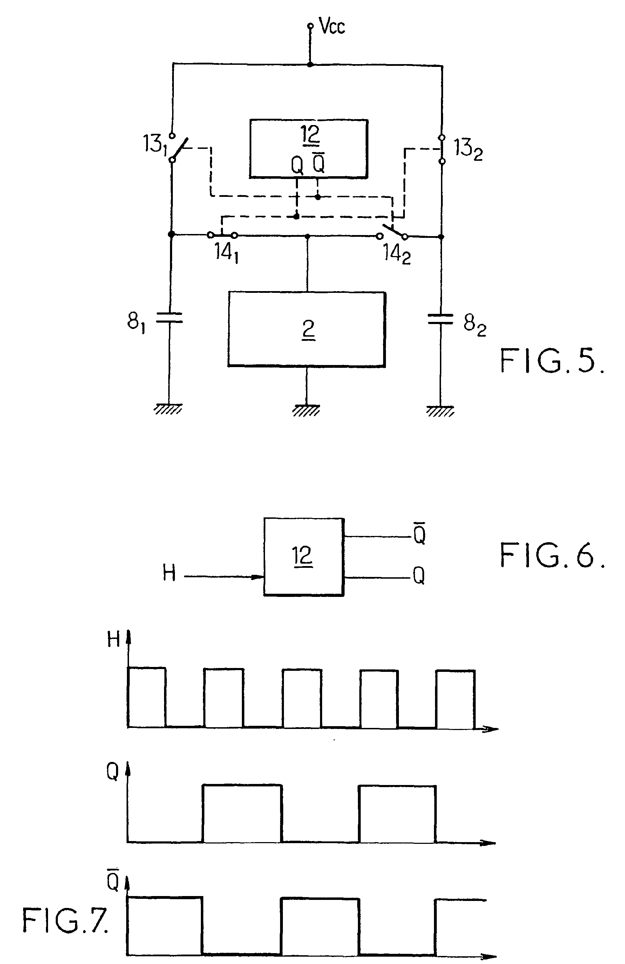

Pour éviter des interruptions d'alimentation du microcircuit (basculement rigoureusement synchrone des deux sélecteurs) ou pour éviter des chevauchements d'alimentation (basculement désynchronisé des deux sélecteurs), il est préférable de remplacer chaque sélecteur 9 par deux interrupteurs 13 (du côté alimentation V_{cc}) et 14 (du côté microcircuit 2). Les interrupteurs sont alors commandés simultanément de façon croisée (interrupteurs 13₁, 14₂ ; interrupteurs 13₂, 14₁) comme illustré à la figure 5 ou individuellement avec des décalages. Cette solution technique offre en outre l'avantage, du point de vue de l'intégration, que chaque interrupteur est réalisé de façon simple par un transistor commandé par impulsions.

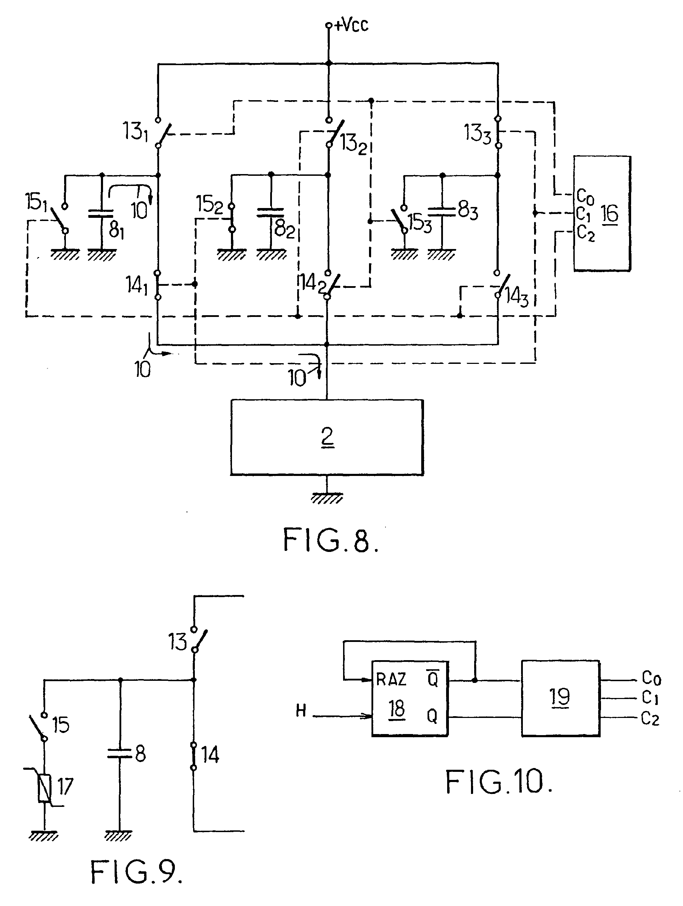

Les moyens de commande 12 peuvent, de façon très simple, être constitués par le signal d'horloge H et son complément H̅. On peut aussi, comme illustré à la figure 6, mettre en oeuvre un compteur binaire (par exemple le circuit disponible dans le commerce sous la référence 74 HCT 193 E) déclenché par les fronts montants du signal d'horloge H et fournissant sur ses deux sorties Q et Q̅ des signaux en opposition de phase. A la figure 7, sont représentés les diagrammes illustrant le signal d'horloge H, le signal de sortie Q et le signal inversé Q̅.

Bien que le montage à deux condensateurs commutés qui vient d'être décrit procure une relative maximisation de la consommation du microcircuit, le résultat obtenu peut, au moins pour certaines applications, se révéler insuffisant. En effet, le taux de décharge de chaque condensateur au moment de la commutation dépend de la consommation du microcircuit au cours du cycle correspondant. De ce fait ce taux de décharge (ou son corollaire le taux de charge résiduel) peut être détecté au cours du cycle de charge immédiatement consécutif et une information sur le fonctionnement du microcircuit peut en être déduite.

On propose donc, pour écarter cet inconvénient, que chaque condensateur, avant d'être rechargé (et donc connecté à l'alimentation V_{cc}), soit encore plus déchargé, notamment jusqu'à une valeur de seuil prédéterminée. A cet effet, on a recours à un mode de réalisation à trois condensateurs commutés cycliquement comme illustré à la figure 8. Chaque branche est constituée de la même manière que chaque branche du montage de la figure 5, avec en outre un interrupteur additionnel 15 disposé en parallèle sur chaque condensateur 13 pour commander la décharge additionnelle de celui-ci. Sur la figure 8, les composants de chaque branche sont désignés avec les mêmes références numériques que ceux correspondants de la figure 5, avec un indice i = 1, 2, 3 pour les branches respectives. Les moyens de commande 16 peuvent, comme illustré, comporter trois sorties C₀, C₁, C₂ raccordées chacune à trois interrupteurs (un par branche) de façon que chaque cycle assure simultanément les trois fonctions suivantes :
- un condensateur (8₁ sur la figure 8) est raccordé à l'entrée d'alimentation du microcircuit 2 et, ayant été préalablement chargé, il alimente celui-ci (flèches 10) ;
- un condensateur (8₂ sur la figure 8), qui alimentait précédemment le microcircuit 2, est court-circuité par l'interrupteur 15₂ fermé et est donc encore plus déchargé ;
- un condensateur (8₃ sur la figure 8), qui a été préalablement déchargé, est relié à l'alimentation V_{cc} pour être chargé.

Une prédétermination du seuil de décharge peut être obtenue en insérant un élément tel qu'une diode Zéner 17 entre chaque interrupteur de court-circuit 15 et la masse. La figure 9 illustre une branche ainsi agencée.

Les condensateurs 8 doivent avoir une capacité de l'ordre de la dizaine de nanofarads. Les diodes Zéner sont de type 4,3 V. Les interrupteurs commandés en tension doivent présenter une impédance aussi faible que possible en position passante. Compte tenu de l'impédance relativement élevée des diodes Zéner, chaque interrupteur de court-circuit 15 peut se limiter à un simple transistor de type NMOS, ce qui améliore l'efficacité.

Les moyens de commande 16 peuvent être constitués comme illustré à la figure 10 : un compteur binaire 18 (par exemple disponible dans le commerce sous la référence 74 HCT 193 E) reçoit sur son entrée les impulsions d'horloge H ; sa sortie inversée Q̅ est bouclée sur l'entrée de remise à zéro RAZ. Les deux sorties directe Q et inversée Q̅ sont reliées aux entrées respectives d'un décodeur binaire 19 (démultiplexage 2 pour 4) - par exemple du type disponible dans le commerce sous la référence 74 HCT 139 E) -, dont les trois sorties délivrent des signaux cycliques C₀, C₁, C₂ servant à la commande cyclique des trois branches comme exposé ci-dessus.

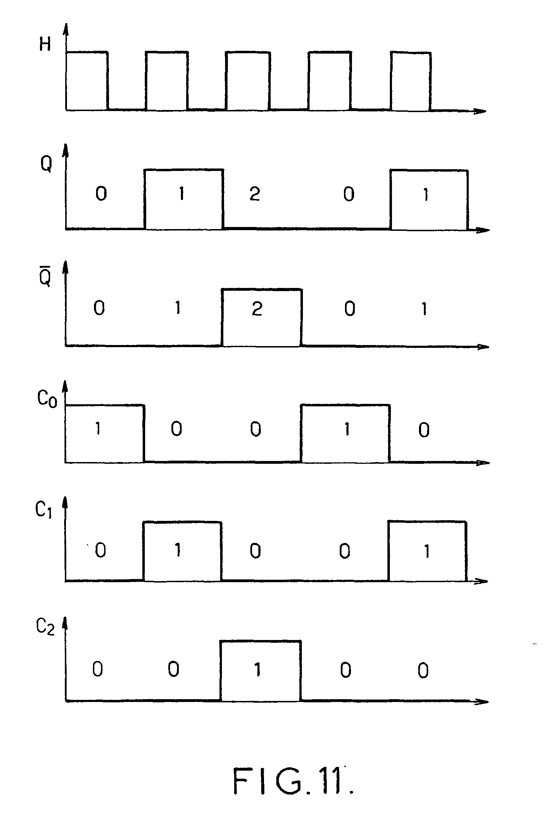

A la figure 11, les diagrammes montrent successivement le signal d'horloge H appliqué à l'entrée du compteur binaire 18, les deux signaux en opposition de phase Q et Q̅ présents aux deux sorties dudit compteur et appliqués aux entrées du décodeur 19, et les trois signaux C₀, C₁, C₂ commandant des triplettes d'interrupteurs pour procurer l'alimentation cyclique du microcircuit 2.

Bien entendu, d'autres dispositions peuvent être mises en oeuvre sans sortir du cadre de l'invention. En particulier, le nombre des branches commutées cycliquement peut être accru, et être porté par exemple à quatre ou cinq, sachant que la maximisation de la consommation du micromodule (et donc la qualité du brouillage obtenue) est d'autant meilleure que le nombre de branches est accru.

On notera en définitive que l'invention conduit aux avantages suivants :
- la consommation de courant électrique mesurée sur la vignette ne reflète plus la consommation nécessaire à l'exécution des instructions sur le microcircuit ;
- la pose d'une résistance sur la vignette (nécessaire pour mesurer le courant consommé) est susceptible d'augmenter le temps de charge des condensateurs, et donc d'empêcher le fonctionnement normal du microcircuit, ce qui rend la carte à puce invalide temporairement ;
- la destruction du dispositif de l'invention annexé au microcircuit entraîne la destruction du micromodule : il reste alors des traces visibles puisque le micromodule est enchâssé dans un support en matière plastique (carte) ; la carte à puce peut alors être invalidée définitivement.

## Revendications

1. Procédé pour prémunir un micromodule de carte à puce contre une analyse du courant électrique consommé par le microcircuit contenu dans le micromodule au cours de son fonctionnement, **caractérisé en ce qu'**on maximise la consommation électrique du microcircuit en assurant une fonction d'alimentation tampon en alimentant le microcircuit à travers au moins deux condensateurs commutés, alternativement et en opposition l'un par rapport à l'autre, entre l'alimentation électrique pour qu'ils se chargent et la borne d'alimentation du microcircuit pour qu'ils se déchargent dans celui-ci en l'alimentant électriquement.

2. Procédé selon la revendication 1, **caractérisé en ce que** la fonction d'alimentation tampon est assurée au sein du microcircuit.

3. Procédé selon la revendication 1, **caractérisé en ce que** la fonction d'alimentation tampon est assurée entre le microcircuit et la vignette formée par l'ensemble des contacts du micromodule.

4. Procédé selon l'une quelconque des revendications 1 à 3, **caractérisé en ce qu'**on assure la fonction d'alimentation tampon en alimentant le microcircuit à travers au moins trois condensateurs commutés cycliquement de manière que, simultanément :
- un premier condensateur, précédemment chargé, alimente le microcircuit,
- un deuxième condensateur, qui précédemment alimentait le microcircuit, est mis en court-circuit pour être plus déchargé,
- et un troisième condensateur, précédemment mis en court-circuit, est connecté à l'alimentation en vue d'être chargé,
ces étapes étant séquentiellement renouvelées avec permutation cyclique des condensateurs.

5. Micromodule de carte à puce agencé pour être prémuni contre une analyse du courant électrique qu'il consomme en fonctionnement, ce micromodule (1) comprenant un microcircuit (2), une vignette (3) constituée des contacts (4), et notamment un contact d'alimentation électrique V_{cc}, propres à la connexion avec un appareil de traitement, des fils (5) reliant respectivement lesdits contacts (4) au microcircuit (2),
**caractérisé en ce qu'**il comprend en outre, fonctionnellement interposés entre le susdit contact (4) d'alimentation V_{cc} de la vignette (3) et le microcircuit (2), des moyens (6, 7) d'alimentation tampon propres à maximiser le courant électrique consommé par le microcircuit au cours de son fonctionnement, et **en ce que** lesdits moyens (6, 7) d'alimentation tampon sont du type à au moins deux condensateurs commutés, alternativement et en opposition l'un par rapport à l'autre, entre l'alimentation électrique pour qu'ils se chargent et la borne d'alimentation du microcircuit pour qu'ils se déchargent dans celui-ci en l'alimentant électriquement.

6. Micromodule selon la revendication 5, **caractérisé en ce que** lesdits moyens d'alimentation tampon (6) sont intégrés dans le microcircuit (2), immédiatement en aval de la borne d'alimentation de celui-ci.

7. Micromodule selon la revendication 5, **caractérisé en ce que** lesdits moyens d'alimentation tampon sont réalisés sous forme d'un microcircuit annexe indépendant (7) disposé dans un emplacement de la zone intermédiaire séparant la vignette (3) et le microcircuit principal (2), ledit microcircuit annexe (7) possédant une entrée raccordée au contact (4) d'alimentation V_{cc} de la vignette (3) et une sortie raccordée à la borne d'alimentation du microcircuit principal (2).

8. Micromodule selon l'une quelconque des revendications 5 à 7, **caractérisé en ce que** les moyens d'alimentation tampon (6, 7) comprennent
- les susdits au moins deux condensateurs (8) ayant une borne connectée à la masse,
- des moyens sélecteurs (9 ; 13, 14, 15) associés à chaque condensateur, qui sont connectés à l'autre borne de chaque condensateur et qui sont propres à raccorder celle-ci, sélectivement, au moins à l'alimentation V_{cc} ou au microcircuit (2),
- et des moyens de commande (12, 16) associés aux moyens sélecteurs (9) pour commander ceux-ci de manière cyclique telle que, simultanément, un des condensateurs soit connecté à l'alimentation V_{cc} pour être chargé tandis qu'un autre condensateur est connecté au microcircuit (2) pour alimenter celui-ci, puis inversement.

9. Micromodule selon la revendication 8, **caractérisé en ce que** les moyens d'alimentation tampon comprennent deux condensateurs (8₁, 8₂).

10. Micromodule selon la revendication 8, **caractérisé en ce que** les moyens d'alimentation tampon comprennent trois condensateurs (8₁, 8₂, 8₃), et **en ce que** les moyens de commande (16) associés aux moyens sélecteurs (13₁, 13₂, 13₄ ; 14₁, 14₂, 14₃ ;15₁, 15₂, 15₃) sont propres à commander ceux-ci de manière cyclique telle que, simultanément, un des condensateurs, précédemment déchargé, soit connecté au contact d'alimentation pour être chargé, tandis qu'un autre condensateur, précédemment en charge, soit connecté au microcircuit pour alimenter celui-ci, et tandis enfin que le dernier condensateur, qui alimentait précédemment le microcircuit, soit connecté à la masse pour être mis en court-circuit en vue d'être plus déchargé.

11. Micromodule selon l'une quelconque des revendications 8 à 10, **caractérisé en ce que** les moyens sélecteurs associés à chaque condensateur comprennent des couples d'interrupteurs (13ᵢ, 14ᵢ) connectés, d'un côté, au condensateur (8ᵢ) et, de l'autre côté, à l'alimentation V_{cc} pour l'un et au microcircuit (2) pour l'autre et **en ce que** les moyens de commande (16) sont propres à commander les couples d'interrupteurs (13ᵢ, 14ᵢ) de manière séquentielle propre à éviter les connexions interférentes sur le microcircuit (2).

## Claims

1. Method for protecting a smart card micromodule against monitoring of the electric current consumed by the microcircuit contained in the micromodule during operation thereof, **characterised in that** the electricity consumption of the microcircuit is maximised by providing a buffer supply function by supplying the microcircuit via at least two capacitors which are switched, alternately and in opposition to one another, between the electrical supply so that they charge up and the supply terminal of the microcircuit so that they discharge to the latter, supplying it with electricity.

2. Method according to claim 1, **characterised in that** the buffer supply function is provided within the microcircuit.

3. Method according to claim 1, **characterised in that** the buffer supply function is provided between the microcircuit and the head-and-tail piece formed by the set of contacts of the micromodules.

4. Method according to any one of claims 1 to 3, **characterised in that** the buffer supply function is provided by supplying the microcircuit via at least three capacitors switched cyclically in such a way that, simultaneously:
- a first capacitor, previously charged, supplies the microcircuit,
- a second capacitor, which previously supplied the microcircuit, is short-circuited so as to become more discharged,
- and a third capacitor, previously short-circuited, is connected to the supply in order to be charged,
these stages being repeated sequentially with cyclical permutation of the capacitors.

5. Smart card micromodule configured so as to be protected against monitoring of the electric current that it consumes during operation, this micromodule (1) comprising a microcircuit (2), a head-and-tail piece (3) consisting of contacts (4), in particular an electrical supply contact V_{cc}, designed for connection to a processing device, and wires (5) connecting respectively said contacts (4) to the microcircuit (2),
**characterised in that** it also comprises, functionally interposed between the said supply contact V_{cc} (4) of the head-and-tail piece (3) and the microcircuit (2), buffer supply means (6, 7) capable of maximising the electric current consumed by the microcircuit during operation thereof, and **in that** said buffer supply means (6, 7) are of the type comprising at least two capacitors which are switched, alternately and in opposition to one another, between the electrical supply so that they charge up, and the supply terminal of the microcircuit so that they discharge to the latter, supplying it with electricity.

6. Micromodule according to claim 5, **characterised in that** the said buffer supply means (6) are integrated into the microcircuit (2), immediately in front of the supply terminal of the latter.

7. Micromodule according to claim 5, **characterised in that** said buffer supply means are realised as an independent supplementary microcircuit (7) arranged in a location of the intermediate zone separating the head-and-tail piece (3) and the main microcircuit (2), said supplementary microcircuit (7) comprising an input connected to the supply contact V_{cc} (4) of the head-and-tail piece (3) and an output connected to the supply terminal of the main microcircuit (2).

8. Micromodule according to any one of claims 5 to 7, **characterised in that** the buffer supply means (6, 7) comprise
- said at least two capacitors (8) having a terminal connected to earth,
- selector means (9; 13, 14, 15) associated with each capacitor, which are connected to the other terminal of each capacitor and which are capable of connecting the latter, selectively, at least to the supply Vcc or to the microcircuit (2),
- and control means (12, 16) associated with the selector means (9) for controlling the latter in a cyclical manner such that, simultaneously, one of the capacitors is connected to the supply Vcc so as to be charged, while another capacitor is connected to the microcircuit (2) to supply the latter, followed by the reverse procedure.

9. Micromodule according to claim 8, **characterised in that** the buffer supply means comprise two capacitors (8₁, 8₂) .

10. Micromodule according to claim 8, **characterised in that** the buffer supply means comprise three capacitors (8₁, 8₂, 8₃), and **in that** the control means (16) associated with the selector means (13₁, 13₂, 13₄; 14₁, 14₂, 14₃; 15₁, 15₂, 15₃) are capable of controlling the latter in a cyclical manner such that, simultaneously, one of the capacitors, which was previously discharged, is connected to the supply contact so as to be charged, while another capacitor, previously under charge, is connected to the microcircuit so as to supply the latter, and finally the third capacitor, which previously supplied the microcircuit, is connected to earth so as to be short-circuited in order to become more discharged.

11. Micromodule according to any one of claims 8 to 10, **characterised in that** the selector means associated with each capacitor comprise pairs of circuit breakers (13ᵢ, 14ᵢ) connected on the one hand to the capacitor (8ᵢ), and on the other hand to the supply V_{cc} for one and to the microcircuit (2) for the other, and **in that** the control means (16) are capable of sequentially controlling the pairs of circuit breakers (13ᵢ, 14ᵢ) adapted of preventing interfering connections to the microcircuit (2).

## Patentansprüche

1. Verfahren zum Schützen eines Chipkartenmikromoduls vor einer Analyse des von der Mikroschaltung, die in dem Mikromodul enthalten ist, während seines Betriebs verbrauchten elektrischen Stroms, **dadurch gekennzeichnet, dass** man den elektrischen Verbrauch der Mikroschaltung maximiert, indem man eine Pufferversorgungsfunktion sicherstellt, indem man die Mikroschaltung über mindestens zwei Kondensatoren speist, die abwechselnd und in Opposition zueinander zwischen der elektrischen Stromversorgung zu ihrem Aufladen und der Stromanschlussklemme der Mikroschaltung zu ihrem Entladen, indem sie sich in diese entladen, um sie elektrisch zu speisen, umgeschaltet werden.

2. Verfahren nach Anspruch 1, **dadurch gekennzeichnet, dass** die Pufferversorgungsfunktion innerhalb der Mikroschaltung sichergestellt wird.

3. Verfahren nach Anspruch 1, **dadurch gekennzeichnet, dass** die Pufferversorgungsfunktion zwischen der Mikroschaltung und der Vignette, die von der Einheit der Kontakte des Mikromoduls gebildet wird, sichergestellt wird.

4. Verfahren nach einem der Ansprüche 1 bis 3, **dadurch gekennzeichnet, dass** man die Pufferversorungsfunktion sicherstellt, indem man die Mikroschaltung über mindestens drei Kondensatoren versorgt, die zyklisch so umgeschaltet werden, dass gleichzeitig:
- ein erster Kondensator, der zuerst aufgeladen wurde, die Mikroschaltung speist,
- ein zweiter Kondensator, der zuerst die Mikroschaltung auflud, kurzgeschlossen wird, um mehr entladen zu werden,
- und ein dritter Kondensator, der zuerst kurzgeschaltet war, an die Stromversorgung angeschlossen wird, um aufgeladen zu werden,
wobei diese Schritte sequenziell mit zyklischer Permutation der Kondensatoren wiederholt werden.

5. Chipkartenmikromodul, eingerichtet, um gegen eine Analyse des elektrischen Stroms, den es beim Betrieb verbraucht, geschützt zu werden, wobei dieses Mikromodul (1) eine Mikroschaltung (2), eine Vignette (3) bestehend aus Kontakten (4) und insbesondere aus einem Stromversorgungskontakt V_{cc} aufweist, die an ein Verarbeitungsgerät angeschlossen werden können, wobei Leiter (5) jeweils die Kontakte (4) mit der Mikroschaltung (2) verbinden,
**dadurch gekennzeichnet, dass** es ferner funktional zwischen den Versorgungskontakt (4) V_{cc} der Vignettte (3) und der Mikroschaltung (2) eingefügt Mittel (6, 7) zum Pufferversorgen aufweist, die den elektrischen Strom maximieren können, der von der Mikroschaltung während ihres Betriebs verbraucht wird, und dass die Mittel (6, 7) zur Pufferversorgung des Typs mit mindestens zwei Kondensatoren sind, die alternativ und einander entgegen gesetzt zwischen der Stromversorgung zu ihrem Aufladen und der Stromanschlussklemme der Mikroschaltung, damit sie sich in diese entladen und sie elektrisch speisen, umgeschaltet werden.

6. Mikromodul nach Anspruch 5, **dadurch gekennzeichnet, dass** die Pufferversorgungsmittel (6) in die Mikroschaltung (2) unmittelbar stromabwärts ihrer Stromanschlussklemme eingebaut sind.

7. Mikromodul nach Anspruch 5, **dadurch gekennzeichnet, dass** die Pufferversorgungsmittel in Form einer unabhängigen Hilfsmikroschaltung (7) ausgeführt sind, die an einer Stelle der Zwischenzone, die die Vignette (3) und die Hauptmikroschaltung (2) trennt, angeordnet ist, wobei die Hilfsmikroschaltung (7) einen Eingang besitzt, der an den Versorgungskontakt (4) V_{cc} der Vignette (3) angeschlossen ist, und einen Ausgang, der an die Stromanschlussklemme der Hauptmikroschaltung (2) angeschlossen ist.

8. Mikromodul nach einem der Ansprüche 5 bis 7, **dadurch gekennzeichnet, dass** die Pufferversorgungsmittel (6, 7) Folgendes aufweisen:
- die oben erwähnten mindestens zwei Kondensatoren (8), die eine an die Masse angeschlossene Klemme haben,
- Wählmittel (9; 13, 14, 15), die jedem Kondensator zugeordnet sind, die an die andere Klemme jedes Kondensators angeschlossen sind und die diese selektiv zumindest an die Stromversorgung V_{cc} oder an die Mikroschaltung (2) anschließen können,
- und Steuermittel (12, 16), die den Wählmitteln (9) zugeordnet sind, um diese zyklisch so zu steuern, dass gleichzeitig einer der Kondensatoren an die Stromversorgung V_{cc} angeschlossen wird, um aufgeladen zu werden, während ein anderer Kondensator an die Mikroschaltung (2) angeschlossen wird, um diese zu speisen, und dann umgekehrt.

9. Mikromodul nach Anspruch 8, **dadurch gekennzeichnet, dass** die Pufferversorgungsmittel zwei Kondensatoren (8₁, 8₂) aufweisen.

10. Mikromodul nach Anspruch 8, **dadurch gekennzeichnet, dass** die Pufferspeichermittel drei Kondensatoren (8₁, 8₂, 8₃) aufweisen, und dass die Steuermittel (16), die den Wählmitteln (13₁, 13₂, 13₃; 14₁, 14₂, 14₃; 15₁, 15₂, 15₃) zugeordnet sind, diese zyklisch so steuern können, dass gleichzeitig einer der Kondensatoren, der zuvor entladen wurde, an die Stromanschlussklemme zum Aufladen angeschlossen wird, während der andere Kondensator, der zuvor aufgeladen wurde, an die Mikroschaltung angeschlossen wird, um diese zu speisen, und während schließlich der letzte Kondensator, der zuvor die Mikroschaltung speiste, an die Masse gelegt wird, um kurzgeschlossen zu werden, um mehr entladen zu werden.

11. Mikromodul nach einem der Ansprüche 8 bis 10, **dadurch gekennzeichnet, dass** die Auswahlmittel, die jedem Kondensator zugeordnet sind, Schalterpaare (13ᵢ, 14ᵢ) aufweisen, die einerseits an den Kondensator (8i) und andererseits an die Stromversorgung V_{cc} für den einen und an die Mikroschaltung (2) für den anderen angeschlossen sind, und dass die Steuermittel (16) die Schalterpaare (13ᵢ, 14ᵢ) sequenziell steuern können, so dass die auf der Mikroschaltung (2) interferierenden Anschlüsse vermieden werden.
